(19) Europäisches Patentamt

European Patent Office

Office européen des brevets

(11) **EP 1 376 721 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(51) Int Cl.$^7$: **H01M 2/16**, H01M 10/24

(21) Anmeldenummer: **03003011.8**

(22) Anmeldetag: **12.02.2003**

(54) **Verfahren zur Herstellung eines Separatormaterials für alkalische Akkumulatoren**

Method for the production of a separator material for alcaline batteries

Méthode de fabrication d'un matériau pour séparateur de batteries alcalines

(84) Benannte Vertragsstaaten:
**AT BE BG CH CY CZ DE DK EE ES FI FR GB GR HU IE IT LI LU MC NL PT SE SI SK TR**

(30) Priorität: **16.05.2002 DE 10222219**

(43) Veröffentlichungstag der Anmeldung:
**02.01.2004 Patentblatt 2004/01**

(73) Patentinhaber: **Carl Freudenberg KG 69469 Weinheim (DE)**

(72) Erfinder:
• **Kritzer, Peter 67147 Forst (DE)**
• **Schwöbel, Rolf-Peter 69483 Waldmichelbach (DE)**

(56) Entgegenhaltungen:
**DE-C1- 19 523 231      US-A- 3 951 691**

**Beschreibung**

Die Erfindung betrifft ein Verfahren zur Herstellung eines Separatormaterials für alkalische Akkumulatoren.

Alkalische Akkumulatoren müssen ein Separatorenmaterial besitzen, das die folgenden Eigenschaften hat:

- Beständigkeit gegenüber dem Elektrolyten (meist konzentrierte Kali- oder Natronlauge) bei Temperaturen bis zu 70 °C
- Beständigkeit gegenüber Oxidation
- Geringer Ionendurchgangs-Widerstand
- Hoher Elektronenduchgangs-Widerstand
- Permanente und gute Benetzbarkeit durch und hohes Speichervermögen für den Elektrolyten
- Rückhaltevermögen für Partikel, die von den Elektroden abgelöst werden
- Hohe mechanische Stabilität
- Hohe Homogenität des Materials und damit geringe Fertigungstoleranzen bei seiner Herstellung

Je nach dem eingesetzten Polymer, aus dem der Separator hergestellt ist, weisen die entsprechenden Separator-Materialien jedoch verschiedene Vor- und Nachteile auf. So sind Separatoren aus Polyolefinen sehr gut widerstandsfähig gegen den chemischen Angriff durch stark alkalische Elektrolyten und Oxydation im elektrochemischen Umfeld der Akkumulatoren, ihre Benetzbarkeit durch den wässrigen alkalischen Elektrolyten ist jedoch schlecht. Polyamid ist dagegen immer ausreichend gut benetzbar, jedoch ist seine Hydrolysebeständigkeit besonders bei höheren Temperaturen nicht ausreichend.

In den Dokumenten DE-A 2 164 901, DE-A 1 142 924, DE-A 2 203 167 und DE-A 2 438 531 sind Separatoren aus Polyamid und/oder Polyolefinen beschrieben. Zur Erhöhung der Benetzbarkeit von Polyolefin-Fasem sind in der Vergangenheit verschiedene Verfahren vorgeschlagen worden. So offenbaren die Dokumente DE-A 31 16 738 und EP-A 0 625 805 eine Plasmabehandlung von Polyolefinen und die Dokumente JP-A 61/19056, JP-A 2/276154 sowie DE-A 195 23 231 Fluorierungsverfahren von Polyolefinen. Das Dokument EP-A 593 612 beschreibt ein Verfahren zur Oberflächenmodifizierung von Polyolefinen durch naßchemische Aufpfropfung eines Vinylmonomeren. Zur Oberflächenmodifizierung von Separatoren aus Polyolefinen ist es weiterhin aus dem Dokument EP-A 316916 bekannt, Polyolefine in Oleum zu sulfonieren.

Das Patent JP 06-187962 beschreibt einen Batterie-Separator in Form eines Polyolefin-Vliesstoffes, auf den ein Acrylat-Styrol-Copolymer in Form eines Harzes, das 35% Acrylnitril enthält, aufgebracht wird. Die aufgebrachten HarzMengen betragen 3-50% der Separator-Masse. In einem weiteren Schritt wird die Nitrilgruppe 30 min lang in 90 °C heißer Kalilauge hydrolisiert, wobei Ammoniak freigesetzt wird. Ziel dieses Patentes ist es, eine permanente Benetzbarkeit gegenüber dem Elektrolyten zu gewährleisten.

Das Patent US 3951691 offenbart einen Separator basierend auf einem Polyolefinvlies, das mit 0.2-30 gew.-% eines $\alpha$-Olefins /$\alpha,\beta$ ungesättigte Säure oder Anhydrid copolymers imprägniert wird, wobei das Copolymer 5-80 gew.-% Säure oder Säureanhydrid enthält. Die Copolymeren werden nierzu in einer wäßrigen Beise gelöst, das Vlies imprägniert und anschließend erfolgt eine Nachbehandlung durch Erhitzen oder Ansäuern, sodaß das Copolymer in einer festen Form vorliegt.

Das Patent JP 05-151948 beschreibt ein Batterie-Separator-Material für Nickel /Metallhydrid-Akkumulatoren, das eine höhere Zahl an Lade- / Entlade-Zyklen garantieren soll. Zu diesem Zweck werden die Polyolefin-Basismaterialien mit einem Co-Polymer aus Polyethylen und Polyacrylsäure beaufschlagt. Die Beaufschlagung erfolgt dabei in Form einer Imprägnierung aus organischer Lösung mit Xylol als Lösungsmittel bzw. mit der Aufbringung von Puder. Die aufgebrachten Mengen betragen < 10 g/m$^2$. In anschließenden Schritten wird entweder zuerst eine konzentrierte Salpetersäure appliziert und anschließend mit konzentrierter Schwefelsäure sulfoniert. Alternativ kann die Sulfonierung durch Auslagerung in trockenem SO$_3$-Gas erzielt werden.
In beiden Fällen muss das Material anschließend mit einer ammoniakalischen Lösung neutralisiert werden. Erst durch die Sulfonierung wird das erwünschte Ziel erreicht. Bei einer Applikation des Polymers ohne anschließende Sulfonierung findet kein positiver Effekt bzgl. der Zyklenzahl statt.

Beim Einsatz im Nickel-/Metallhydrid- oder Nickel-/Cadmium-Akkumulatoren kommt dem Separator eine weitere Aufgabe zu. Solche Akkumulatoren zeigen den Nachteil einer beschleunigten Selbstentladung. Die Elektronen werden hierbei langsam im Inneren der Zellen durch Diffusions- und Migrations-Vorgänge von der negativen Cadmiumoder Metallhydrid-Elektrode zur positiven Nickeloxid-Elektrode transportiert und stehen dann nicht mehr für externe Verbraucher zur Verfügung. Die Zelle entlädt sich im Ruhezustand langsam von selbst. Bei extremer Tiefenentladung können dabei die Elektroden unbrauchbar werden, was dann zum Totalverlust des Akkumulators führt. Diese Eigenschaft ist besonders kritisch, wenn der Akkumulator beispielsweise für Notstrom-Applikationen oder als Starter-Batterie in Kraftfahrzeugen eingesetzt werden soll.

Als Mechanismus für diese unerwünschte Selbstentladung werden Stickstoff-Verbindungen diskutiert, die durch Reduktion an der negativen Elektrode und durch Oxidation an der positiven Elektrode für den Transport der Elektronen verantwortlich sind. Die entsprechenden Reaktionen sind am Beispiel der Reaktionsgleichung für einen Nickel-/Metallhydrid-Akkumulator nachstehend dargelegt:

Negative Elektrode

$$NO_3^- + MH_x \rightarrow NO_2^- + MH_{x-2} + H_2O$$

$$NO_2^- + MH_{x-2} \rightarrow NH_3 + MH_{x-8} + OH^- + H_2O$$

Positive Elektrode

$$NH_3 + 6\,NiOOH + H_2O + OH^- \rightarrow 6\,Ni(OH)_2 + NO_2^-$$

$$NO_2^- + 2\,NiOOH + H_2O \rightarrow Ni(OH)_2 + NO_3^-$$

Typische Konzentrationen an Ammoniak im Elektrolyten sind im Bereich von hundert ppm. Aus diesem Grund ist der Eintrag von stickstoffhaltigen Verbindungen durch den Separator (z.B. durch Polyamide oder nachträglich imprägnierte Stickstoff-organische und -anorganische Verbindungen) unbedingt zu vermeiden.

Die vorliegende Erfindung hat sich die Aufgabe gestellt, ein Herstellungsverfahren für Separatoren für alkalische Zellen oder Batterien anzugeben, bei denen das eingesetzte Separatorenmaterial die Selbstentladung vermindert oder unterdrückt.

Die Aufgabe wird erfindungsgemäß durch ein Verfahren zur Herstellung eines Separatormaterials für alkalische Akkumulatoren gelöst, bei dem auf die und/oder in die aus einem Vliesstoff, einer mikroporösen Folie oder einem Gewebe aus einem oder mehreren Polymeren bestehenden Trägermaterial ein Polymer in Partikelform in einer Menge von 1 bis 50 g/m$^2$ auf- und /oder eingebracht ist, wobei das Polymer durch Co-Polymerisation oder Pfropfung mittels reaktiver Extrusion gebildet ist und funktionelle Gruppen im Molekül besitzt, die ein titrimetrisch bestimmtes Ammoniak-Bindevermögen von mindestens 0,2 mmol $NH_3$/g Polymerpulver besitzen.

Durch Fixierung des Ammoniaks an den Separator kann die Ruhe-Selbstentladung deutlich verlangsamt bzw. unter Umständen völlig unterdrückt werden. Die dabei eingesetzten Polymere sind im Gegensatz zu den aus dem Stand der Technik bekannten Materialien nicht durch nachträgliche nasschemische Oberflächenmodifizierungen funktionalisiert.

Vorteilhafterweise wird das auf das Basis-Material aufgebrachte Polymer thermisch auf das Basis-Material gesintert, so dass das Polymer die Fasern bzw. Membran-Oberfläche ganz oder teilweise umgibt, wobei dabei weder die Porosität des Basis-Materials und die Funktionalität verloren geht.

Eine erfindungsgemäße Alternative besteht darin, dass das aufgebrachte Polymer thermisch auf das Basis-Material gesintert wird, und das Polymer sich noch als Partikel auf dem Vliesstoff befindet, jedoch auf der Faser- bzw. Membran-Oberfläche gebunden ist.

Eine zweite erfindungsgemäße Alternative besteht darin, dass das aufgebrachte Polymer mit Hilfe eines Binders oder Klebers auf dem Basis-Material fixiert wird.

Eine dritte erfindungsgemäße Alternative besteht darin, dass das aufgebrachte Polymer lediglich auf die Oberfläche oder in das Innere aufgebracht wird, ohne jedoch anschließend thermisch oder mit Hilfe eines Binders oder Klebers fixiert zu werden.

Eine vierte erfindungsgemäße Alternative besteht letztlich darin, dass das aufgebrachte Polymer schon während der Vliesbildung zugegeben wird.

Die Erfindung betrifft weiterhin die Herstellung eines Separatormaterials, welches mindestens 0,08 mmol $NH_3$ pro g Separatormasse bindet.

Erfindungsgemäß werden die Polymere in Form von Pulver bzw. als Dispersion mit Korngrößen < 1000 μm auf die Faseroberfläche gebunden bzw. abgelegt. Beim reinen Ablegen findet dabei keine Nachverfestigung mehr statt. Das Binden kann prinzipiell durch gegenüber dem Batterie-Elektrolyten stabile Binder erfolgen oder in einer rein thermischen Fixierung direkt auf der Faseroberfläche.

Das Polymer kann bei dieser letzt genannten thermischen Fixierung einen Schmelzpunkt haben, der über dem der Fasern (bzw. bei Bindefasern dem der niedriger schmelzenden Mantel-Komponente) liegt. In diesem Fall wirkt die angeschmolzene Faser als "Binder" und nach der Fixierung liegt noch ein "Partikel-Charakter" des aufgebrachten Polymers vor. Besitzt das Polymer hingegen einen Schmelzpunkt, der unterhalb derer der Fasern liegt, ist das Polymer die bindende Komponente. In diesem Fall werden die Partikel auf einen Teil der Oberfläche geschmolzen. Der Grad dieses Aufschmelzens hängt dabei stark von der Schmelzen-Viskosität ab. Bei Polymeren mit hoher Zähigkeit werden auch bei einem solchen Verfahren noch "echte" Partikel vorliegen.

Die eingesetzten Polymere bestehen erfindungsgemäß aus Materialien, die durch Copolymerisation oder Propfung mittels reaktiver Extrusion eines Polyolefins, Polystyrens, Polyphenylensulfids, Polysulfon, Polyacetals oder Mischungen daraus in der Masse funktionalisiert sind.

Für die Bestimmung des Ammoniakbindevermögens wird folgendes Verfahren eingesetzt:

Etwa 2 g des modifizierten Separator-Materials werden in 120 ml 8 molarer Kalilauge (KOH) unter Zusatz von 5 ml 0,3 molaren Ammoniaks (NH$_3$) 3 Tage lang bei 40°C gelagert. Zwei Blindproben ohne Ausgangspolymer werden gleichzeitig angesetzt. Nach der Lagerung werden eventuelle ölige Abscheidungen mit Filterpapier von der Oberfläche aufgenommen und entfernt. Von den ursprünglich 125 ml des Ansatzes wird eine Teilmenge von 100 ml entnommen und das Ammoniak daraus mit Hilfe einer Wasserdampfdestillation in 150 ml destilliertes Wasser, das mit 10 ml 0,1 molarer Salzsäure (HCl) und einigen Tropfen Methylrot als Indikator versetzt ist, übergetrieben. Die Säure wird anschließend mit 0,1 normaler Natronlauge (NaOH) zurücktitriert.

Die Erfindung wird nachfolgend anhand mehrerer Beispiele näher erläutert.

**Beispiel 1**

Basis-Material ist ein vorkalandertes, glattes Polyolefin-Nassvlies mit einem Flächengewicht von 50 g/m$^2$ und einer Dicke von 150 μm. Aufgebracht wurde ein Pulver, das aus einem Co-Polymer zwischen Polyethylen und Polyacrylsäure mit Korngrößen < 250 μm in Mengen von 10 g/m$^2$. Das Material wurde bei 130°C mit Hilfe eines Kalanders bei einem Liniendruck von 10 N/mm aufgesintert. Die Dicke des entstandenen Separatormaterials beträgt 250 μm, wobei sich eine deutliche "Zweiseitigkeit" zwischen der teilweise geschmolzenen Polymer-"Membran" und der Vliesstoff-Seite zeigte. Trotzdem wies das Material noch eine gute Porosität auf. Das gemessene Ammoniak-Bindevermögen betrug 0,15 mmol NH$_3$ pro g Separatormaterial.

**Beispiel 2**

Als Basis-Material wurde ein vorkalandertes, glattes Polyolefin-Nassvlies mit einem Flächengewicht von 50 g/m$^2$ eingesetzt. Aufgebracht wurde ein Pulver, das aus einem Co-Polymer zwischen Polyethylen und Polyacrylsäure mit Korngrößen 250 μm < x < 500 μm in Mengen von 10 g/m$^2$ besteht. Das Material wurde bei 130°C mit Hilfe eines Kalanders bei einem Liniendruck von 10 N/mm aufgesintert. Die Dicke des entstandenen Separatormaterials betrug 300 μm, wobei sich abermals eine deutliche "Zweiseitigkeit" zeigte. Auch dieses Material war porös. Das gemessene Ammoniak-Bindevermögen betrug 0,13 mmol NH$_3$ pro g Separatormaterial.

**Beispiel 3**

Als Basis-Material wurde ein vorkalandertes, glattes Polyolefin-Nassvlies mit einem Flächengewicht von 50 g/m$^2$ eingesetzt. Aufgebracht wurde ein Pulver, das aus einem Co-Polymer zwischen Polypropylen und Polyacrylsäure mit Korngrößen < 250 μm in Mengen von 10 g/m$^2$. Das Material wurde bei 130°C mit Hilfe eines Kalanders bei einem Liniendruck von 10 N/mm aufgesintert. Die Dicke des entstandenen Separatormaterials betrug 350 μm, wobei noch deutlich die Partikel des Polymers wahrgenommen werden konnten. Das gemessene Ammoniak- Bindevermögen betrug 0,13 mmol NH$_3$ pro g Separatormaterial. Das vorhandene Ammoniak-Bindevermögen zeigt, dass die Funktionalität des Polymers in diesem Falle nicht durch die geschmolzenen Anteile der Bindefaser überdeckt wird.

**Beispiel 4**

Als Basis-Material wurde ein vorkalandertes, glattes Polyolefin-Nassvlies mit einem Flächengewicht von 50 g/m$^2$ eingesetzt. Aufgebracht wurde eine Dispersion eines Co-Polymers zwischen Polypropylen und Polyacrylsäure (Teilchengrößen < 1 μm) in Mengen von 5 g/m$^2$. Die Aufgabe erfolgte mit Hilfe eines Quetschwerkes bei Raumtemperatur. Eine thermische Nachverfestigung fand in diesem Falle nicht statt. Die Dicke des Separatormaterials änderte sich durch diese Art des Aufbringens nicht und betrug weiterhin 150 um. Der typische "Vliesstoff-Charakter" blieb bestehen. Das gemessene Ammoniak-Bindevermögen betrug 0,11 mmol NH$_3$ pro g Separatormaterial.
Es wurde des weiteren versucht, die so aufgetragenen Partikel mit Hilfe von Druckluft von der Oberfläche zu entfernen. Dazu wurde ein ausgerüsteter Vliesstoff 10 s mit Druckluft von einem Druck von 0,4 MPa behandelt. Das Ammoniak-Bindevermögen dieses Vliesstoffes betrug noch 0,09 mmol $NH_3$ pro g Separator. Es kann daher davon ausgegangen werden, dass der überwiegende Teil der Partikel sich nach dieser Behandlung noch auf der Vliesstoff-Oberfläche befindet.

**Beispiel 5**

Als Basis-Material wurde ein vorkalandertes, glattes Polyolefin-Nassylies mit einem Flächengewicht von 50 $g/m^2$ eingesetzt, auf welche eine dünne Schicht eines Epoxid-Binders aufgebracht wurde (Flächengewicht 0,5 $g/m^2$). Anschließend wurde ein Pulver, das aus einem Co-Polymer zwischen Polyethylen und Polyacrylsäure mit Korngrößen < 250 μm in Mengen von 10 $g/m^2$ aufgebracht. Das Separatormaterial wurde abschließend bei T = 50°C und einem Liniendruck von 80 N/mm zwischen zwei Teflon-Walzen auf eine Dicke von 200 μm kalandert. Das gemessene Ammoniak-Bindevermögen betrug 0,14 mmol $NH_3$ pro g Separatormaterial.

**Beispiel 6**

Als Basis-Material wurde ein unkalandertes, relativ offenes Polyolefin-Nassvlies mit einem Flächengewicht von 40 $g/m^2$ und einer Dicke von 400 μm eingesetzt. Aufgebracht wurde ein Pulver, das aus einem Co-Polymer zwischen Polyethylen und Polyacrylsäure mit Korngrößen < 250 μm in Mengen von 10 $g/m^2$. Das Pulver konnte durch den offenen Charakter in diesem Falle in das Innere des Vliesstoffes gelangen. Das Material wurde bei 140 °C mit Hilfe eines Kalanders bei einem Liniendruck von 10 N/mm aufgesintert und der Vliesstoff verfestigt. Die Dicke des entstandenen Separatormaterials betrug 200 μm. Eine Zweiseitigkeit lag in diesem Falle nicht vor. Das entstandene Material war gut porös. Das gemessene Ammoniak-Bindevermögen betrug 0,18 mmol $NH_3$ pro g Separator.

**Beispiel 7**

Als Basis-Material wurde ein unkalandertes, relativ offenes Polyphenylsulfid (PPS) -Nassvlies mit einem Flächengewicht von 50 $g/m^2$ und einer Dicke von 380 μm. PPS besitzt einen Schmelzpunkt >> 200°C. Aufgebracht wurde ein Pulver, das aus einem Co-Polymer zwischen Polypropylen und Polyacrylsäure mit Korngrößen < 250 μm in Mengen von 10 $g/m^2$. Das Pulver konnte, wie in Beispiel 6, beschrieben durch den offenen Charakter in diesem Falle in das Innere des Vliesstoffes gelangen. Das Material wurde bei 140°C mit Hilfe eines Kalanders bei einem Liniendruck von 10 N/mm aufgesintert und der Vliesstoff verfestigt. Die Dicke des entstandenen Separatormaterials betrug 210 μm. Eine Zweiseitigkeit lag auch in diesem Falle nicht vor. Das entstandene Material war gut porös. Das gemessene Ammoniak-Bindevermögen betrug ebenfalls 0,15 mmol $NH_3$ pro g Separatormaterial.

**Beispiel 8**

In diesem Falle wurde ein Pulver des Co-Polymers zwischen Polyethylen und Polyacrylsäure mit Partikel-Größen 250 μm < x < 500 μm zusammen mit den Fasern aufgeschlämmt und das Nassvlies gelegt. Das entstandene, offene Produkt mit einem Flächengewicht von 50 $g/m^2$ (40 $g/m^2$ Fasern; 10 $g/m^2$ Pulver) wurde anschließend bei 140 °C gesintert und kalandert (Liniendruck von 10 N/mm). Die Tiefenverteilung des Polymers war in diesem Falle homogen. Das entstandene Material war gut porös. Das gemessene Ammoniak-Bindevermögen betrug 0,18 mmol $NH_3$ pro g Separator.

**Beispiel 9**

Als Basis-Material wurde ein unkalandertes, relativ offenes Polyolefin-Trockenvlies mit einem Flächengewicht von 50 $g/m^2$ und einer Dicke von 450 um eingesetzt. Aufgebracht wurde ein Pulver, das aus einem Co-Polymer zwischen Polyethylen und Polyacrylsäure mit Korngrößen < 250 μm in Mengen von 10 $g/m^2$. Das Pulver konnte wie in Beispiel 5 beschrieben durch den offenen Charakter in diesem Falle in das Innere des Vliesstoffes gelangen. Das Material wurde bei 140°C mit Hilfe eines Kalanders bei einem Liniendruck von 10 N/mm aufgesintert und der Vliesstoff verfestigt. Die Dicke des entstandenen Separatormaterials betrug 220 μm. Eine Zweiseitigkeit lag auch in diesem Falle nicht vor. Das entstandene Material war gut porös. Das gemessene Ammoniak-Bindevermögen betrug ebenfalls 0,15 mmol $NH_3$ pro g Separatormaterial.

**Vergleichsbeispiel 1**

Für dieses Beispiel wurde das gleiche Nassvlies-Basis-Material, das für die Beispiele 1-4 verwandt wurde (Gewicht von 60 $g/m^2$), eingesetzt. Das ermittelte Ammoniakbindevermögen ("Blindwert") betrug weniger als 0,009

mmol $NH_3$ pro g Separatormaterial.

**Vergleichsbeispiel 2**

Es wurde das gleiche Nassvlies-Basis-Material, das für die Beispiele 1-4 verwandt wurde (Gewicht von 60 $g/m^2$), eingesetzt. Als Polymer-Pulver wurden Co-Polymer PE und Maleinsäure-Anhydrid mit einem Ammoniakbinde-vermögen < 0,01 mmol $NH_3$ pro g Polymer-Pulver oder Co-Polymer PE und Polyacrylsäure (anderer Hersteller) mit einem Ammoniakbindevermögen < 0,01 mmol $NH_3$ pro g Polymer-Pulver eingesetzt. Das ermittelte Ammoniakbindevermögen betrug weniger als 0,009 mmol $NH_3$ pro g Separatormaterial.

Erfindungsgemäß werden Polymere in Partikel-Größen < 250 µm eingesetzt, bei denen das ermittelte Ammoniakbindevermögen 0,52 bzw. 0,55 mmol $NH_3$ pro g Polymer-Pulver beträgt. Es ist hierbei anzumerken, dass durch das Auftragen auf ein Nassvlies das beobachtete Ammoniakbindevermögen über dem theoretischen Wert liegt. So sollte beispielsweise ein Basis-Vliesstoff mit einem Flächengewicht von 50 $g/m^2$, der mit 10 $g/m^2$ eines Polymers mit einem Bindevermögen von 0,52 mmol/g ausgerüstet ist, theoretisch ein Bindevermögen von 0,087 mmol/g besitzen. Der in Bsp. 1 ermittelte Wert von 0,15 mmol/g liegt deutlich über dem theoretisch erwarteten Wert von 0,095 mmol/g. Darüber hinaus ist der Einfluss der Polymer-Korngröße viel kleiner als erwartet (vgl. Bsp. 1 und 2).

**Beispiel 13**

Die Separatoren aus gemäß Beispiel 1 und Beispiel 8 wurden in jeweils 22 Nickel-Metallhydrid-Zellen der Größe AA eingebaut. Ein Set von jeweils 11 Zellen wurde vollständig geladen und bei definierter Temperatur über eine bestimmte Zeit gelagert. Nach dieser Lagerung wurde die verbleibende RestLadung und somit die Selbstentladung bestimmt. Zum Vergleich wurden Zellen, ausgestattet mit fluorierten Separatormaterial, die keine Ammoniak-AufnahmeKapazität aufweisen, gemessen. Darüber hinaus wurde die Selbstentladung von Zellen mit Separatormaterial, die ein hohes Ammoniak-AufnahmeVermögen (UV-induziert gepfropfte Acrylsäure bzw. sulfonierte Materialien) beobachtet.
Es zeigt sich, dass bei Raumtemperatur die Selbstentladung bei allen Zellen gleich gering ist. Bei höheren Temperaturen zeigt sich allerdings, dass Zellen mit Ammoniak-bindenden Separatormaterial eine deutlich geringere Selbstentladung aufweisen.
Eine hohe Selbstentladung ist besonders kritisch bei Batterien in z.B. Notebooks oder bei Starter-Batterien für Autos.

| | Fluoriertes Nassvlies | Nassvlies mit Pulver ausgerüstet (nach Bsp. 1) | Nassvlies mit Pulver ausgerüstet (nach Bsp. 8) | Nassvlies, Acrylsäure -gepropft | Sulfoniertes Nassvlies |
|---|---|---|---|---|---|
| Ammoniak-Aufnahme-Kapazität (mmol/g) | 0 | 0.15 | 0.18 | 0.25 | 0.3 |
| Selbstentladung 28 Tage bei 20 °C | 25 | 24 | 24 | 25 | 24 |
| Selbstentladung 7 Tage bei 45 °C | 33 | 25 | 24 | 24 | 22 |
| Selbstentladung 3 Tage bei 60 °C [%] | 65 | 33 | 32 | 32 | 33 |

**Patentansprüche**

1. Verfahren zur Herstellung eines Separatormaterials für alkalische Akkumulatoren, **dadurch gekennzeichnet, dass** das Separatormaterial ein Vliesstoff, eine mikroporöse Folie oder ein Gewebe aus einem oder mehreren Polymeren ist, auf die und/oder in die ein Polymer in Partikelform in einer Menge von 1 bis 50 $g/m^2$ an der Ober-fläche und /oder in dem Vliesstoff oder dem Gewebe fixiert wird, wobei das Polymer durch Co-Polymerisation oder Pfropfung mittels reaktiver Extrusion gebildet ist und funktionelle Gruppen im Molekül besitzt, die ein titrimetrisch bestimmtes Ammoniak-Bindevermögen von mindestens 0,2 mmol NH$_3$/g Polymerpulver besitzen.

2. Verfahren nach Anspruch 1, **dadurch gekennzeichnet, dass** das auf das Basis-Material Ammoniak-bindende Polymer thermisch auf das Basis-Material gesintert wird, so dass das Polymer die Fasern bzw. Membran-Oberfläche ganz oder teilweise umgibt, so dass dabei weder die Porosität des Basis-Materials und die Funktionalität verloren geht.

3. Verfahren nach einem der Ansprüche 1 bis 2, **dadurch gekennzeichnet, dass** das Ammoniak-bindende Polymer thermisch auf das Basis-Material gesintert wird, und das Polymer sich noch als Partikel auf dem Vliesstoff befindet, jedoch auf der Faser- bzw. Membran-Oberfläche gebunden ist.

4. Verfahren nach einem der Ansprüche 1 bis 2, **dadurch gekennzeichnet, dass** das Ammoniak-bindende Polymer mit Hilfe eines Binders oder Klebers auf dem Basis-Material fixiert wird.

5. Verfahren nach einem der Ansprüche 1 bis 2, **dadurch gekennzeichnet, dass** das Ammoniak-bindende Polymer lediglich im Inneren des Vliesstoffes oder des Gewebes eingetragen wird, ohne jedoch anschließend thermisch oder mit Hilfe eines Binders oder Klebers fixiert zu werden.

6. Verfahren nach einem der Ansprüche 1 bis 2, **dadurch gekennzeichnet, dass** das Ammoniak-bindende Polymer schon während der Vliesbildung zugegeben wird.

7. Verfahren nach einem der Ansprüche 1 bis 6, **dadurch gekennzeichnet, dass** das so hergestellte Material zur Verbesserung der Benetzbarkeit fluoriert bzw. nach anderen gängigen Methoden nachbehandelt wird.

**Claims**

1. A process for producing a separator material for alkaline accumulators, **characterized in that** the separator material is a nonwoven web fabric, a microporous self-supporting film or a woven fabric which are each composed of one or more polymers and onto and/or into each of which a particulate polymer is fixed at the surface and/or in the woven or nonwoven web fabric in an amount in the range from 1 to 50 g/m$^2$, the polymer being formed by copolymerization or grafting by means of reactive extrusion and having functional groups in the molecule which possess a titrimetrically determined ammonia-binding capacity of not less than 0.2 mmol NH$_3$/g of polymer powder.

2. A process according to claim 1, **characterized in that** the ammonia-binding polymer is thermally sintered onto the base material, so that the polymer completely or partially surrounds the fibres or membrane surface, so that neither the porosity of the base material nor the functionality is lost.

3. A process according to either of claims 1 and 2, **characterized in that** the ammonia-binding polymer is thermally sintered onto the base material and the polymer is still present as particles on the nonwoven web fabric, yet bonded to the fibre or membrane surface.

4. A process according to either of claims 1 and 2, **characterized in that** the ammonia-binding polymer is fixed to the base material with the aid of a binder or adhesive.

5. A process according to either of claims 1 and 2, **characterized in that** the ammonia-binding polymer is merely introduced into the interior of the woven or nonwoven web fabric without; however, being subsequently fixed thermally or with the aid of binder or adhesive.

6. A process according to either of claims 1 and 2, **characterized in that** the ammonia-binding polymer is added during web formation.

7. A process according to any one of claims 1 to 6, **characterized in that** the material thus produced is fluorinated or otherwise conventionally aftertreated to improve wettability.

**Revendications**

1.  Procédé pour la préparation d'un matériau séparateur pour des accumulateurs alcalins, **caractérisé en ce que** le matériau séparateur est un non-tissé, une feuille microporeuse ou un tissu en un ou plusieurs polymères, sur lequel et/ou dans lequel est fixé un polymère sous forme de particules en une quantité de 1 à 50 g/m$^2$ à la surface et/ou dans le non-tissé ou le tissu, le polymère étant formé par copolymérisation ou greffage au moyen d'une extrusion réactive et présentant des groupements fonctionnels dans la molécule qui présentent un pouvoir de liaison d'ammoniaque, déterminé par titrimétrie, d'au moins 0,2 mmole de NH$_3$/g de poudre de polymère.

2.  Procédé selon la revendication 1, **caractérisé en ce que** le polymère liant l'ammoniaque est fritté thermiquement sur le matériau de base, de telle manière que le polymère entoure totalement ou partiellement les fibres ou, selon le cas, la surface de la membrane, de telle manière que ni la porosité du matériau de base ni la fonctionnalité ne sont perdues.

3.  Procédé selon la revendication 1 ou 2, **caractérisé en ce que** le polymère liant l'ammoniaque est fritté thermiquement sur le matériau de base et **en ce que** le polymère se trouve encore sous forme de particules sur le non-tissé, mais est lié sur la surface des fibres ou de la membrane.

4.  Procédé selon la revendication 1 ou 2, **caractérisé en ce que** le polymère liant l'ammoniaque est fixé à l'aide d'un liant ou d'un adhésif sur le matériau de base.

5.  Procédé selon la revendication 1 ou 2, **caractérisé en ce que** le polymère liant l'ammoniaque n'est introduit qu'à l'intérieur du non-tissé ou du tissu, sans toutefois être fixé consécutivement par voie thermique ou à l'aide d'un liant ou d'un adhésif.

6.  Procédé selon la revendication 1 ou 2, **caractérisé en ce que** le polymère liant l'ammoniaque est déjà ajouté pendant la formation du non-tissé.

7.  Procédé selon l'une quelconque des revendications 1 à 6, **caractérisé en ce que** le matériau ainsi préparé est fluoré ou post-traité selon d'autres procédés usuels en vue d'améliorer la mouillabilité.